Europäisches Patentamt

(19) European Patent Office

Office européen des brevets

(11) Publication number: **0 270 360**
**A2**

# (12) EUROPEAN PATENT APPLICATION

(21) Application number: **87310621.5**

(22) Date of filing: **02.12.87**

(51) Int. Cl.⁴: **G 06 F 15/40**

(30) Priority: **02.12.86 US 938207**

(43) Date of publication of application:
**08.06.88 Bulletin 88/23**

(84) Designated Contracting States: **DE FR GB NL**

(71) Applicant: **TEKTRONIX, INC.**
**Howard Vollum Park 14150 S.W. Karl Braun Drive P.O.**
**Box 500**
**Beaverton Oregon 97077 (US)**

(72) Inventor: **Schwartz, Mayer D.**
**4160 S.W. 195th Court**
**Aloha Oregon (US)**

**Delisle, Norman M.**
**2915 S.W. Hume Street**
**Portland Oregon (US)**

(74) Representative: **Burke, Steven David et al**
**R.G.C. Jenkins & Co. 26 Caxton Street**
**London SW1H 0RJ (GB)**

(54) **Data management system.**

(57) A data management system comprises a computerized data storage and retrieval utility for integrating data sequences produced by independent data processing operations into graphs by linking stored data sequences ("nodes") according to user-definable relationships. The machine permits users to subdivide graphs into independently accessible contexts and permits users to identify contexts and the nodes and links within each context according to user-defined attributes. Further included are search routines for locating groups of contexts, data sequences and links having similar attributes. The machine also maintains an archive of versions of contexts, nodes and links referenced according to their creation time.

FIG. I

**Description**

DATA MANAGEMENT SYSTEM

Background of the Invention

The present invention relates to computerized data storage and retrieval systems and in particular to a system for linking separate data files according to user-definable relationships.

Typically one of the most difficult aspects of large engineering projects or the like is record keeping. For instance, in the design and construction of a nuclear plant, massive numbers of documents are generated, including preliminary studies, drawings, specifications, letters, reports, etc. These documents must be stored in logical fashion so that they can be retrieved when needed. When the number of such documents becomes very large it is often difficult to find them once they are stored, particularly when only the nature of a document to be retrieved, and not a name or a reference number under which it is filed, is known.

In addition to problems associated with storing and retrieving documents, there are also considerations associated with the "ripple" effect that changing one project document may have on other project documents. For instance if a design drawing is changed, other drawings of a specification which relate to the drawing might also have to be altered. For a very complex project it is not easy to determine the other documents affected. Also it is often important to keep records of document changes, including not only prior versions of a document but in addition records as to why a document was changed and who changed it.

The use of computerized data base systems is well known. Data base systems permit documents to be characterized according to various attributes of the document such as "author", "document type", "subject matter", etc. For instance, to characterize a specification for a pump written by Smith, a user may assign character strings "Smith", "specification", and "pump" as the values of author, document type and subject matter attributes. Such data base systems typically include search routines for locating documents identified by assigned attribute values matching a list of selected attribute values provided by a user, thereby enabling a user easily to locate all documents sharing a common set of attributes such as all pump specifications written by Smith.

More recently, the advent of rapid access bulk data storage devices and multiple computer networks has permitted computer systems actually to create and electronically store the documents as files in a bulk storage device in addition to keeping track of documents. To be effective for use in storing and retrieving documents associated with a large project, such file management systems should be capable not only of locating groups of files containing documents having common attributes, but also of finding groups of files which are related to a given file in some definable way. For instance, once a user has located a particular file containing Smith's pump specification, he may then wish to locate other files which contain reviewer's comments regarding the pump specification or which may contain pump drawings related to the pump specification. There is continuing activity in the area of computerized data storage and retrieval systems pertaining to "hypertext" systems which enable users to establish "links" between stored data sequences (also called "nodes") indicating that two nodes are related in some way. (The article "Reading and Writing the Electronic Book", by Nicole Yankelovich and Norman Meyrowitz, pages 15-30 in the October, 1985 issue of Computer, published by the Institute of Electrical and Electronic Engineers, is a good summary of information relating to systems of this type and is incorporated herein by reference.) A "link" can be visualized as a pointer from a first node to a second node indicating the second node is related to the first node. A link is implemented as a stored record containing data identifying the linked first and second nodes and containing link attribute data defining the nature of the relationship between the two nodes. For instance, when the first node is a specification and the second node is a comment regarding the specification, a link record may be created which identifies the first and second nodes and which contains link attribute data indicating that the relationship between the nodes is one of "comment". A separate link record is provided for every pair of linked nodes. If three comments have been written about a particular specification and stored in separate nodes, three link records may be created, each indicating a "comment" relationship between the specification node and a corresponding one of the comment nodes. Link records may be grouped according to the nodes they link so that once a particular node is identified, such as the specification node, all other nodes, such as the comment nodes, to which the particular node is linked can be quickly determined by reviewing only the link records associated with the particular node.

A node or a link may have assigned attributes characterizing the nature of the node or link, but the concept of a node attribute, as known in the art, differs somewhat from the concept of a link attribute. Although separate nodes may be related by node attributes, the relationship between such nodes is one of commonality and is non-directed in that the relationship does not involve a pointing from one node to another node. For instance, all nodes created by Smith are related by virtue of having a common author and this common feature of each such node may be denoted by using "Smith" as the value of an "author" node attribute for each node. In contrast, links describe relationships between pairs of nodes in a directed fashion, in the sense that a link leads a user "from" a first document "to" another document for a particular reason, the link attribute being descriptive of that reason. Thus the relationship indicated by a link attribute is not one of commonality but is rather one of "connectivity". For instance, the relationship between a first node containing a drawing and a second node containing a comment about the drawing cannot be easily described in terms of what both nodes

0 270 360

have in common (i.e., by a node attribute) since the nodes differ; one node is a "drawing" and the other node is a "comment". But if the concept of "comment" is used to describe a link between the two nodes, rather than to describe the nature of one of the nodes, the relationship between the nodes is clearly specified.

Even though a node may be thought of as con taining a "comment", and therefore may be assigned a node attribute value "comment", it is not particularly useful to do since users are typically not interested in finding the group of all nodes which contain comments. Instead, users are usually more interested in finding nodes containing comments about a particular user-identified node. It is therefore much more useful to establish a link between two nodes where the link has a "comment" attribute.

Links give a collection of nodes structure by connecting node pairs to form a "web" or a "graph". Some systems are adapted to display a representation of the graph enabling a user to visualize how sets of nodes are interrelated in much the same way that a map depicts how towns are interconnected by roads or rivers. Thus, for instance, when a user decides to change one node, he may quickly determine all of the other nodes which might be affected by the change by inspecting other nodes which are linked to the node to be changed.

However, if the number of nodes associated with a project is large, the graphs become complex, difficult to display and difficult for a user to utilize. Therefore systems typically enable a user to reduce the size of a graph to be displayed by specifying to the system the attributes of various nodes of interest. The system then displays a "subgraph" which contains only nodes characterized by the special attributes. For instance, when a user is only interested in nodes relating to pumps, the system displays the nodes representing pump-related nodes along with their interconnecting links, thereby reducing the number of nodes the user night have to inspect in order to find a particular node of interest.

While prior systems help a user to organize and retrieve stored data, these systems leave certain record keeping problems unresolved. One problem relates to the difficulty of preselecting the types of node or link attributes which may be most advantageous. In order for a system to be useful, the attributes and their values which a user can use to describe nodes and links must provide an appropriate basis for searches to be performed by the system. However, only a limited number of attributes is usually contemplated.

Hypertext systems would be more useful if they included provisions for maintaining comprehensive records of how project documentation changes with time. Some computerized data storage systems store old versions of a document, but for large projects, documents often undergo so many revisions that it becomes impractical or impossible to store every version of every document. It would also be desirable to maintain a history of changes to node and link attributes. For instance, a node attribute may indicate the name of a person responsible for approving changes to that document, and when another person assumes that responsibility the corresponding attribute value must be changed. But in doing so the identity of the person previously responsible for approving changes is lost unless some means can be provided for maintaining the information. An ideal system would be able to recreate the entire graph of a system as it existed at any previous time, including the contents of nodes at the time, the node attributes assigned to the nodes, the links between nodes existing at the time and the link attributes existing at the time. This feature would be very useful in determining the cause of problems that arise in the course of a project, but implementation thereof is generally impractical in prior art systems.

Another problem associated with the use of multi-user systems occurs when two people independently attempt to change the same node at the same time. A conflict arises as to which new version should be considered the latest version. Some systems prevent the conflict by blocking access to a node by more than one person at a time, but this approach inefficiently utilizes multiple user capability, particularly when one user wants only to read the node rather than change it.

Summary of the Invention

A data management machine of the present invention enables a user to characterize stored data sequences ("nodes") according to user-definable "node attributes". Each node attribute is a variable having a user-defined name such as "author", or "subject matter", and a user may assign a value to the node attribute for each node. The values that may be assigned to a node attribute may comprise user-defined character strings, such as "Smith" or "pump specification", or may be an integer. The machine stores data representing node attributes and their values in a set of "node records", each node record comprising a collection of data associated with a node.

Since the attributes are user-definable, the user can establish a new attribute whenever he recognizes a new distinguishing feature about a node. For instance, text nodes may be created which are written in various languages and a user may wish to classify nodes according to the language in which they are written. The present invention enables the user to establish a new node attribute named, for example, with the character string "language". He may then assign the character string "French" as the value of the language attribute for every node written in French and he may assign the character string "English" as the value of language attribute for every node written in English. Thus, unlike data management systems of the prior art, the present invention enables a user to establish a new node attribute whenever the need arises and the user is not limited to selecting from among a fixed number of predefined attributes.

The data management machine of the present invention further enables a user to establish "links" between related node pairs. A "link" is a user-defined relationship between two nodes, the link being evidenced by a stored "link record", a collection of data including references to the two nodes being linked and including data describing "link attributes" and their assigned values. A "link attribute" is a variable comprising user-defined

3

character string as a name. The user can also assign a value to the link attribute variable to characterize a relationship between two nodes. This attribute value may also be a user-defined character string or may be an integer. As an example of the utilization of links, when a first node contains a drawing for a pump, a second node contains a specification for the pump shown in the drawing, and a third node contains comments regarding the drawing, a user may define two links, a first linking the first and second nodes and a second linking the first and third nodes. Each link may be characterized by a link attribute which the user may, for instance, name "reference". Fore the link relating the drawing node to the specification node, the user may assign a value to the "reference" link attribute which the user calls "specification". For the link relating the drawing node to the designer comments node, the user may assign the character string "comment" as the value of the "reference" link attribute. The machine of the present invention creates the appropriate link records based on the user's input regarding the nodes to be linked and the names and values of the link attributes.

In accordance with an aspect of the invention, a graph of nodes and links may be partitioned into a set of independent "contexts", each comprising a separate "view" of the graph through which a user accesses a particular portion of nodes and links of a graph. When a graph is initially created, an empty "root context" within which users may store and access new nodes and links is created. Users may subsequently create additional, initially empty, contexts into which the user may store further nodes and links. Users may also copy ("merge") nodes and links existing within one context into any other context so that many "instances" of the same node or link may exist simultaneously, each in a different context. To access a particular instance of a node or link, the user identifies the graph and context in which the node or link exists as well as the particular node or link to be accessed within the context.

A user may create a new context as a "private workspace" into which existing nodes and links are copied from a "master" context. These nodes and links may then be modified in the new context without affecting original nodes and links in the master context. A modified node or link may be subsequently merged back into the master context from which they were copied to create a new version of the original node or link in the master context. This partitioning of a graph into independent contexts allows users to organize large graphs of nodes and links and permits teams of authors to work together on a collection of documents with limited risk of interfering with each other by reducing the likelihood of conflicts when nodes and links are modified.

The subject matter of the present invention is particularly pointed out and distinctly claimed in the concluding portion of this specification. However, both the organisation and method of operation of the invention, together with advantages and objects thereof, may best be understood by reference to the following description taken in connection with accompanying drawings wherein like reference characters refer to like elements.

Drawings

FIG. 1 is a block diagram of an information management system utilizing the present invention;

FIG. 2 is a diagram of the evolution of a node passing through merge operations between two contexts;

FIG. 3 is a block diagram of computer software according to the present invention;

FIG. 4 is a diagram depicting relationships between selected data files maintained by the software of FIG. 3;

FIG. 5 is a diagram depicting additional rela tionships between selected data files maintained by the software of FIG. 3; and

FIG. 6 is a diagram illustrating a link between two nodes.

Detailed Description

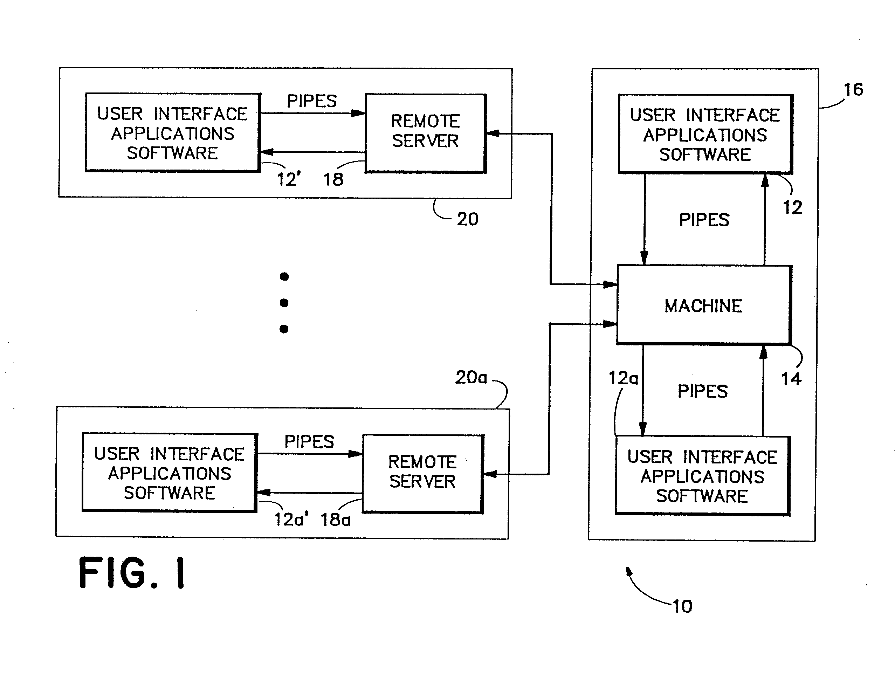

Referring to FIG. 1, there is depicted in block diagram form an information management system 10 adapted to perform selected data processing operations for multiple users. The system includes a software-based data management machine 14 according to the present invention adapted to provide a data storage and retrieval utility that supports denotation of relationships between data within separate data sequences produced by system users. In the preferred embodiment of the present invention, system 10 is adapted to operate within the multiple user UNIX operating system environment. (The UNIX operating system was developed by the American Telephone and Telegraph Company and is described in the book Using the UNIX System, by Richard Gauthier, published in 1981 by the Reston Publishing Company.) Each user creates and modifies data sequences by means of user interface applications software running as separate UNIX processes. In the example of FIG. 1, two users may concurrently utilize separate applications software 12 and 12a running on the same computer 16 as the machine 14, accessing the machine through UNIX pipes. (A UNIX pipe is a communication channel between two processes such as machine 14 and application software 12 or 12a.) Two other users may utilize applications software 12' and 12a' running on remote computers 20 and 20a which access the machine 14 through remote servers 10 and 18a. Com puters 16, 20 and 20a suitably comprise Digital Equipment Corporation VAX model computers or other computers capable of operating within the UNIX operating system environment.

User applications software 12 (and 12a) (hereinafter also called "user") may carry out any of a variety of data processing functions and may by way of example comprise word processors, computer-aided design and other graphics systems, and data base systems, each of the type producing sequences of data to be stored. The data sequences from the user are transmitted to machine 14 which, working through the UNIX operating system, is responsible for controlling the storage of the data sequences as files in bulk storage media such as a disk.

The data management machine 14 enables a user to characterize stored data sequences (hereinafter called "nodes") according to user-definable "node attributes". A node attribute is a variable having a user-defined name such as "author", or "subject matter", and may be assigned a user-defined value characterizing each node. The node attribute values may be user-defined character strings such as "Smith" or "pump specification" or may be user-selected integers. The user is not limited to selecting from among a fixed number of predefined node attributes in order to characterize nodes but can establish new node attributes and new node attribute values whenever the need arises. For instance, when a user decides to classify nodes according to the number of bytes of data in the node, the user may establish a new node attribute which the user chooses to name with the character string "length" and may assign an integer representing the document length as the value of the "length" attribute for each node. After the user provides machine 14 with data indicating which node is to be assigned an attribute, and the name and value of the attribute, the machine stores data indicating the node attribute and its value in a "node record" associated with the node. A node record associated with each node contains data indicating all of the node attributes and their values which have been defined by the user and assigned to the node.

The machine 14 also permits a user to establish "links" between selected pairs of related nodes. A "link" is a user-defined relationship between two nodes, the link being evidenced by data in a stored "link record". A link record is a stored file containing data identifying two nodes being linked and describing various "link attributes" and their assigned "link attribute values". A "link attribute" is a parameter having a user-definable name such as "reference" to which the user can sign a link attribute value characterizing the relationship between the identified pair of nodes. The attribute value is also user-defined and can be either a character string or a number. For instance, a first node may contain a drawing for a pump, a second node may contain a specification for the same pump, and a third node may contain comments regarding the drawing. The user may establish two links, one between the first and second nodes and another between the first and third nodes. Each link may be characterized by a link attribute, which the user may name "reference", the value of which more precisely describes one of a set of relationships that may exist between a node and all other nodes which refer to that node. For the link relating the drawing to the specification, the user may assign a value to the "reference" link attribute which he calls "specification". For the link relating the drawing to the designer comments, the user may assign the character string "comment" as the value of the reference link attribute. The machine 14 then establishes the appropriate link records including a first link record identifying the first and second nodes and containing data indicating "reference" as an attribute of the link and "specification" as the value of the attribute, and a second link record identifying the first and third nodes and containing data indicating "reference" as an attribute of the link and "comment" as the value of the attribute. It is important to note that in characterizing a link, the user is not limited to selection from among a limited set of predetermined link attributes but can define any number of new link attributes and new link attribute values whenever the need arises.

Thus the present invention enables a user not only to define new values of node and link attributes but also to create new node and link attributes. In systems of the prior art which permit the use of node and link attributes, the number and names of node and link attributes are fixed and the user can only change the values of node and link attributes associated with particular nodes and links; he cannot define new node or link attributes.

The use of appropriately selected link and node attributes enables a user to quickly locate nodes of interest when the user cannot precisely identify which nodes he wants to locate but does know certain characteristics of the nodes. The machine 14 is adapted to provide a user with a list of all nodes and links characterized by user-selected combinations of node and link attribute values. The machine finds the appropriate node and links by searching through the node and link records which contain the node and link attribute information. Therefore the ability of user to define and assign new attributes to nodes and links when he determines that a newly recognized node or link characteristic may provide a useful search basis, gives the user more control over searches than is possible when the number and nature of assignable node and link attributes are fixed and predetermined.

The machine 14 is adapted to perform two different kinds of searches, one called a "traversal" search and the other called "query" search. To initiate a "transversal" search, a user provides the machine with the identification of a first node along with a predicate for the nodes and a predicate for the links, each predicate comprising a description of a set of link or node attributes and their values which describe nodes or links of interest to the user. The machine then performs a "depth first" search by which it identifies all nodes connected to the first node through a series of intermediate links and nodes wherein the intermediate nodes and links are all characterized by the selected node or link attribute values. Thus in a traversal search, the machine 14 "traverses" a graph starting with an initial node and following only those links which have the selected link attributes and passing through only those nodes having the selected node attributes, and the machine identifies to the user the nodes and links traversed in this fashion.

This traversal search is particularly useful when links indicate an ordered progression of nodes, as for instance when each section of a specification is stored as a separate node and links having "next section" attribute values are provided to relate each successive section. Thus a user need only identify the first section of the specification and provide the machine with a "specification" node attribute value and a "next section" link attribute value. The machine will find every section of the specification and identify them to the user in the order encountered. Since the search is performed by traversing ordered links, the order in which specification sections are encountered matches the order in which the sections occur in the specification.

The machine 14 is also adapted to perform "query" searches. For a query search, the user provides node and link predicates which describe the set of attributes and their values, but does not provide a starting node. The system then searches node and link records to identify all of the nodes characterized by the selected node attribute values and all of the links characterized by the selected link attribute values which interconnect the identified nodes. One difference in result between the traversal search and the query search is that the depth first traversal search always identifies the nodes in the proper order whereas the query search returns the nodes in arbitrary order. For a query search to be adequately selective, the node attributes must be more precisely defined than for the traversal search. In the example of the specification, if more than one specification is stored in the system, additional node attribute values must be utilized to distinguish between nodes associated with different specifications. This is not required for the traversal method. The traversal method can be much faster than the query method because only node records encountered during the traversal are inspected but the query search is useful when the user cannot identify a starting node of a traversal search.

When the user produces an new sequence of data to be stored and transmits the data sequence to machine 14, machine 14 produces UNIX commands necessary to cause the UNIX operating system to store the data sequence in a disk or other bulk storage device as a node in a UNIX data file. Nodes are grouped into "contexts" (as discussed hereinbelow) and the machine 14 identifies each node by three parameters: "Contexdld", a parameter used to identify a particular context of nodes, "NodeIndex", a unique code associated with the particular node distinguishing it from other nodes within a particular context, and "Time", a number determined according to the date and time that the node was created. These parameters are returned to the user at the time and the node is stored. Subsequently, when a user seeks to access the contents of an existing node, the user may transmit a request to machine 14 to access ("check out") the node, identifying the node by its ContextId, NodeIndex and Time parameters. The machine 14 then transmits a copy of the mode contents to the user. The user may modify the contents and transmit the modified contents back to the machine 14 for storage. When the machine changes the contents of a node, it updates the Time parameter to reflect the time of the change rather than the time the node was initially created. The use of the Time parameter permits machine 14 to identify and resolve conflicts arising when different users attempt to modify the contents of the same node. In changing or modifying the contents of a node, the first user, when requesting machine 14 to store ("check in") the new node contents in place of the current node contents, identifies the node by supplying the ContextId, Node Index and Time parameters, and if the supplied Time parameter value does not equal the Time parameter value corresponding to the current contents (current version) of the node, then machine 14 aborts the storage of the first user's version because the incorrect Time parameter supplied by the first user indicates that a second user has modified the node since the first user checked it out.

The machine 14 permits a user to declare a node to be either a "file" or an "archive" type node. The contents on an existing node are written over when a user checks in a modified version of the node contents and in a "file" type node the previous version of the node is lost. However in the case of an "archive" node, the machine 14 stores a set of instructions (a "version history") which, when followed, converts the latest version of the node to the previous version. A version history is created and stored each time an archive node is changed and the set of stored version histories associated with an archive node enables the machine 14 to recreate all previous versions of an archive node.

The machine 14 also identifies each link according to a LinkIndex parameter and a Time parameter. The LinkIndex parameter is a unique code identifying the link and the Time parameter is a number indicating the time that the link was created (the "version time"). A user may direct the machine to delete a link from a "graph", and if the link connects only "file" type nodes for which version histories are not maintained, the machine will respond by destroying the link record describing the link to be deleted. However if the link connects an "archive" type node, the machine 14 will not destroy the link record. Instead, the machine 14 stores an additional Time parameter in the record indicating the time that the link was deleted. Thus the machine can determine when the link "existed" from the creation and deletion Time parameters stored in the link record.

The machine also maintains records of previously assigned values of node and link attributes as they existed at any given time. These records, in conjunction with the time referenced link records and the node version histories, enable machine 14 to determine the state of nodes, links, and attribute values as they existed at any previous time. In fact, if every node is declared an archive type node, then the machine 14 can completely reconstruct a "graph" as it existed at any previous time.

When the user requests the machine 14 to perform a query or a traversal search, as previously described, the user may provide the machine with a specified prior time and the machine will base the query or traversal search on the graph as it existed at the user-specified time. Thus the machine 14 is not only adapted to reconstruct a graph as it previously existed, it is also adapted to perform user-directed query and traversal searches based on previous states of the graph, thereby making it easy for a user to locate previous versions of nodes.

In accordance with the present invention, a graph of nodes and links may be partitioned into a set of independent "contexts", each comprising a separate "view" of the graph through which a user accesses particular nodes and links of a graph. When a graph is initially created, an empty "root context" is also created in which users may store and access new nodes and links. Users may subsequently create additional initially empty contexts within which users may store additional nodes and links. A user may create a link between two nodes in the same context, or may create a link between nodes in different contexts. A user may create a new "instance" of an existing node by copying ("merging") the existing node from one context" into another context and thus it is possible for many instances of a node to exist simultaneously, but each instance of the node must reside in a different context. Thus contexts may be thought of as separate layers or planes of a three-dimensional graph wherein different instances of the same node may appear in one or more planes. Different instances of the same node may be modified independently and a separate version history is maintained for each instance of a node. However different instances of the same node always retain their identity as instances of the same node even after one instance is modified. When a first instance of a node is merged from one context into another context which already contains a second instance of the same node, the merged copy of the first instance becomes the latest version of the second instance of the node.

When a user requests two or more nodes to be merged from a first context to a second context, the data management machine automatically merges all links interconnecting the merged nodes into the second context, thereby creating new instances of the links in the second context. The new link instances interconnect the new instances of the merged nodes in the same way that the original links interconnect the instances of the nodes in the first context. The data management machine also creates new instances of any links connecting the merged nodes in the first context to nodes of the first context which were not merged into the second context. These new link instances are "cross-context" links because they connect the new instances of nodes residing in the second context to unmerged node instances residing in the first context. Node and link attributes are separately maintained for each instance of a node or a link and whenever a node or a link is merged into a different context, all of the node and link attributes are also merged into the new context. Attributes of different instances of a node or a link residing in different contexts may also be independently modified. Separate version histories are maintained for all link instances and for attributes associated with each node and link instance. To access a particular version of a particular instance of a node or link, a user must identify the node or the link, the context in which the particular instance resides, and the version time of interest.

Typically a user will create a new context as a "private workspace" into which instances of existing nodes and links are copied from a "master" context. A user may then modify these node and link instances in the new context without affecting original nodes and links in the master context. A modified node or link any be subsequently merged back into the master context from which they were copied to create a later version of the original node or link in the master context.

This partitioning of a graph into independent contexts permits users to organize large graphs of nodes and links so that a team of authors can work together on a collection of documents with limited risk of interfering with each other by reducing the likelihood of conflicts when nodes and links are modified. Each author may be permitted access to a particular master context for the purpose of merging certain of the nodes and links in the master context into his own private context where instances of the nodes and links may be modified without affecting the master context's nodes and links and without affecting copies in any other author's context. An author can also create new nodes and links in his private context. At some particular time, the work in a private context can be "released" to the team by merging nodes and links of the private context into the master context. If a node or a link from the private context is a modified instance of a node or link in the master context, the modified instance becomes a later version of the original instance in the master context.

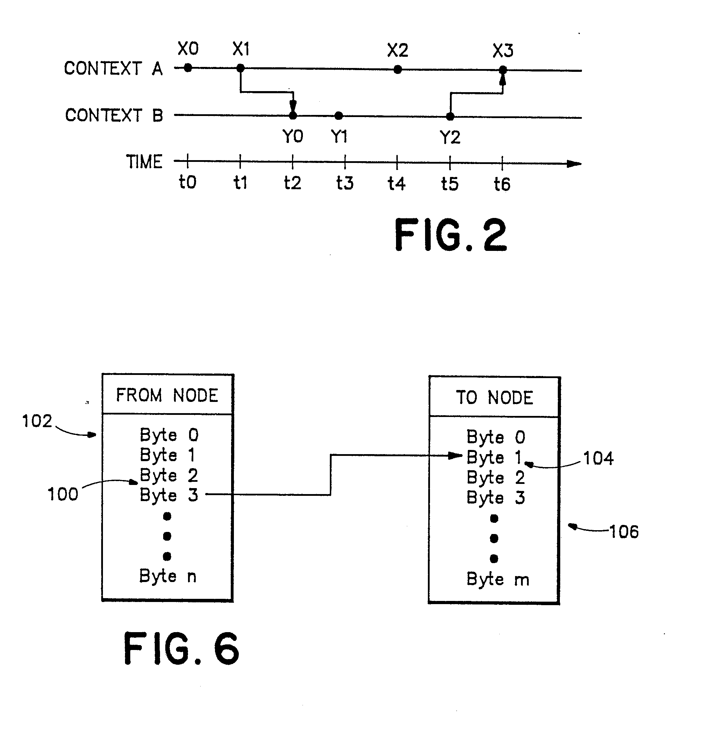

However, because more than one author can modify a private instance of a master node or link and then merge that instance back into the master context, conflicts may arise. FIG. 2 illustrates a "version tree" showing the evolution of a node instance "X" in a context A as it is merged into a context B to form a node instance "Y". Node instance Y is then modi fied and merged back into context A to form a later version of node instance X. Version $X0$ of node X was created in context A at time $t0$ and then modified to form version $X1$ at time $t1$. Version $X1$ was merged into context B to form version $Y0$ of node Y at time $t2$. Node Y was then modified at time $t3$ and again at time $t5$ to form two subsequent versions $Y1$ and $Y2$ of node Y. In the meantime, node X in context A was modified at time $t4$ to form version $X2$. At time $t6$ version $Y2$ of node Y in context B is merged into context A to form a new version $X3$ of X. It should be noted that the version history of node X contains a discontinuity between versions $X2$ and $X3$ of node X since version $X3$ was not derived from version $X2$ but from node Y version $Y2$. Modifications made to $X1$ to form $X2$ would be "lost" in the sense that they would not be reflected in version $X3$. Therefore, prior to performing a merge operation where nodes and links from context B are copied into the master context A to form new version of original nodes and links in the master context, a user controlling context B may wish to know whether another user has already updated some of the same nodes or links in the master context A. The user can do this by checking the Time parameter identifying the most recent version ($X2$) of the master context node to determine if it is the same version ($X1$) that was copied to form version $Y0$ in context B. In the example case, the Time parameter of node $X2$ will of course not match the Time parameter of node $X1$ and the conflict will be detected. A user may also invoke a "CheckForDifferences" routine which compares the contents of two nodes and returns differences therebetween. It also checks for differences in node attributes, links of the node and link attributes.

Once the conflict is detected, the author may want to know what the differences between versions $X1$ and $X2$ (or between nodes $X2$ and $Y2$) are so that the author can determine if important information will be lost by merging instance Y2 into context A. Accordingly the machine 14 of the present invention provides a user with an indication of differences between any two nodes utilizing a procedure described hereinbelow.

In the preferred embodiment of the present invention, a link may connect a node in one context to a node in another context; however, the link must "reside" in the same context as one of the nodes it connects. In merge operations, a user may specify one or more nodes to be copied from one context to another, but may not specify links to be copied. Rather, when the user specifies a node to be copied from a first context to a second context, the machine 14 automatically copies all links connected to the node into the second context.

In the same way that a user may assign attributes and attribute values to nodes and links to facilitate searches, a user may also assign attributes and attribute values to contexts. The machine includes a search program as described hereinbelow which may be invoked to assist the user to locate contexts based on the assigned context attribute values.

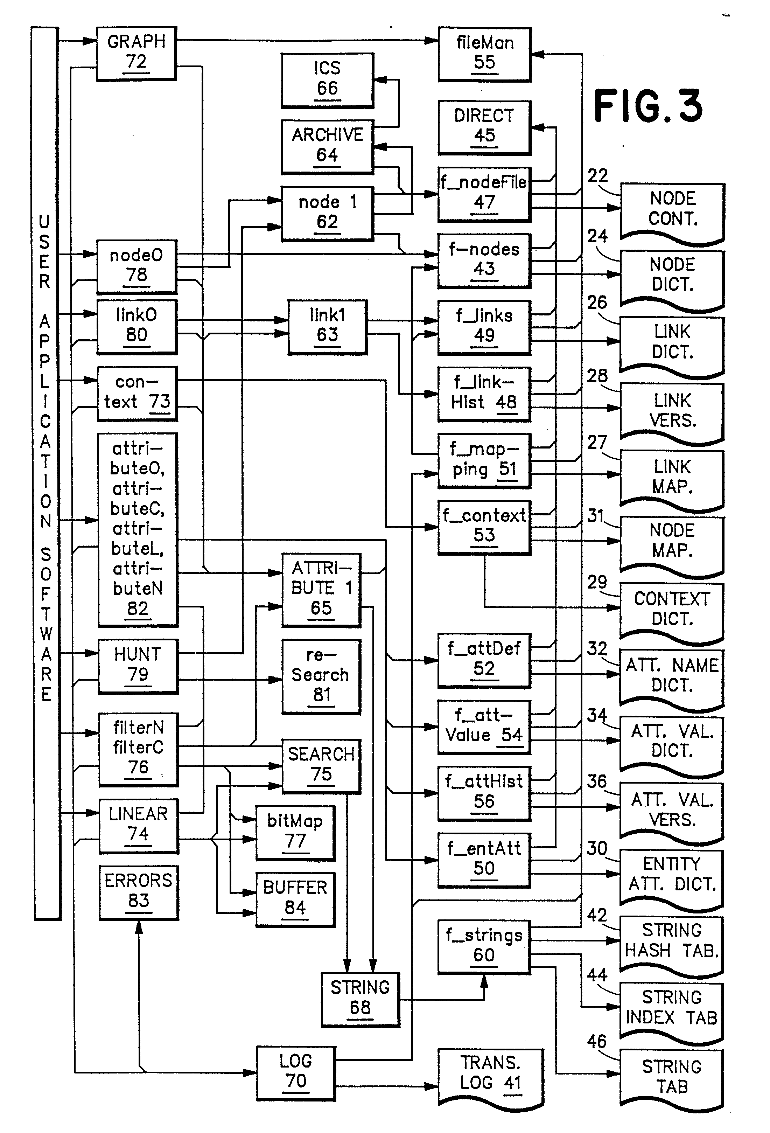

A listing of C language programs for implementing the machine 14 according to the present invention is included in Appendix I to this specification. FIG. 3 is a block diagram of the software of Appendix I wherein each block represents a program listed in Appendix I or one of several data files maintained by the programs. Node contents files 22 of FIG. 3 are maintained for each context for storing the contents of nodes and information regarding pre vious versions of nodes. A single context dictionary file 29 is provided which contains an entry for each context in the graph. Each entry in the context dictionary 29 includes the following parameters:

creation Time:

This is a Time parameter indicating when this context (the context associated with the context dictionary entry) was created.

author:

This is an identification of a person responsible for controlling access to this context.

attributes:

This is a set of attribute/value parameter pairs pointing to entries in an attribute name dictionary 32 and in an attribute values dictionary 34 of FIG. 3. Each attribute name dictionary 32 entry indicates the name of a particular attribute and each attribute values dictionary 34 entry indicates a particular context attribute value. One attribute parameter pair is included in each context dictionary 29 entry for each attribute characterizing this context.

parentId:

This parameter identifies the "parent" of this context. Contexts are arranged in a hierarchy whereby a new context, other than the root (global) context, is created as a "child" of an existing (parent) context. This hierarchical structure enables the user to organize contexts.

firstChild:

This parameter identifies the first child of this context in a linked list of child contexts of this context.

nextSibling:

This parameter identifies a next sibling of this context in a linked list of children of the parent context of this context.

One node dictionary 24 file is provided for each context and contains a set of entries ("node records"), one for each node in the context. Each entry contains information about its corresponding node including the following parameters:

creationTime:

This parameter indicates the version time of this node (i.e., the described by this node dictionary entry).

lastUpdateTime:

The value of this parameter indicates the version time for the next most recent version of this node. In the preferred embodiment of the invention, version times are indicated by the number of seconds elapsed since an arbitrary starting moment.

deletionTime:

If this node is "deleted" from a graph, and the node is an archive node, this parameter is assigned a value indicating the first time this node was deleted.

status:

This parameter indicates whether this node is an archive type node.

creator:

This parameter identifies the user that created this node.

actualIndex:

This parameter is a "global" identification for this node. All instances of the same node in different contexts are identified by the same actaulIndex parameter value.

firstOutlink:

This parameter is a LinkIndex describing a first of a set of all "out links" pointing from this node to other nodes in a graph.

firstInLink:

This parameter is a LinkIndex describing a first of a set of all "in links" pointing to this node from any other node in the context.

attributes:

This is a set of attribute/value parameter pairs pointing to entries in an attribute name dictionary 32 and an attribute values dictionary 34 of FIG. 3. Each attibute name dictionary 32 entry indicates the name of a particular attribute and each attribute values dictionary 34 entry indicates a particular node attribute value. One attribute parameter pair is included in each node dictionary 24 entry for each attribute characterizing the node.

One link dictionary 26 of FIG. 3 is provided for each context and contains a set of entries (link records) for storing information about each link in the context including the following parameters:

fromNode:

This parameter is a NodeIndex of a "from node" from which this link (the link described by the link dictionary entry) points.

toNode:

This parameter is a NodeIndex for the current version of a "to node" to which this link points.

deletion Time:

This is a version time parameter indicating the first time this link was deleted from the graph, if this link has been deleted. If the link has not been deleted, the deletionTime parameter is assigned a maximal non-zero integer.,

creator:

This parameter identifies the user creating this link.

actualIndex:

This parameter is a global identification for this link. All instances of the same link in different contexts are identified by the same actualIndex number.

attributes:

This is a set of parameter pairs pointing to entries in the attribute values dictionary 34 and the attribute name dictionary 32. One attributes parameter pair is included for each attribute characterizing this link. The attribute values dictionary 34 entries indicate the values of attributes associated with this link and the attribute name dictionary 32 entries indicate the names of the attributes associated with this link.

currentValue:

This is a set of parameters indicating the] ContextId of the fromNode and toNode and "link point positions" within the sequences of data stored in the "from node" and the "to node" related by this link. A "link point position" refers to a particular bit of data in a node to which or from which this link points.

previousVersion, prevIndex:

These parameters point to a second entry in the link version file 28 describing a previous version of this link.

nextOutlink:

This parameter is a LinkIndex for another entry in the link dictionary 26 associated with another link directed from the same "from node" as this link. The nextOutlink parameters in each link dictionary 26 entry interconnect all of the link dictionary entries describing links directed from any particular node to form a linked list of "out link" entries. The firstOutlink parameter within the node dictionary 24 entry describing each node is a LinkIndex for the first link dictionary 26 entry of the linked list of "out link" entries and all other out links can be determined by traversing the out link list.

nextInlink:

This parameter is a LinkIndex for another entry in the link dictionary 26 associated with a link directed to the same node as this link. The nextInlink parameters in each link dictionary 26 entry interconnect all of the link dictionary entries describing links directed to any particular node to form a linked "in link" list of entries. The firstInlink parameter within the node dictionary 24 entry describing a particular node is a LinkIndex for the first link dictionary 26 entry of the linked list of out link entries. Thus a linked "in link" list of link dictionary entries is also provided for every node. The "in links" for each node can be determined by traversing the associated "in link" list.

One attribute value dictionary 34 of FIG. 3 is provided for each context and contains an entry for each attribute value for each context, each node or each link of the context. Each entry in the attribute value dictionary includes the following parameters:

entity:

This is a NodeIndex, LinkIndex or ContextId for the node dictionary 24, link dictionary 26, or context dictionary 29 entry to which the attribute value referenced by the attribute value dictionary 34 entry is assigned.

currentValue:

The value of a link, node or context attribute may be changed from time to time and a version history of each attribute value is maintained for archive nodes and links connecting archive nodes. Attribute values are also assigned a version time to identify different versions of the same attribute. The currentValue parameter is a record of the verison time associated with the current value of the attribute and also containing an integer value or a string index parameter representing the character string name of the current attribute value. A character string represented by a string index parameter is determined by accessing a string table 46 of FIG. 3.

previous, prevIndex:

The attribute value version file 36 contains entries described in previous versions of the attribute value and these entries in the attribute value versions file form a linked list which may be traversed to ascertain any previous version of a node, link or context attribute value. The previous and previouIndex parameters are utilized to locate the first entry of the linked list.

One attribute name dictionary 32 of FIG. 3 is provided for each context and contains an entry for each attribute name and string index parameter identifying the character strings which name the attribute. An entity attributes dictionary 30 of FIG. 3 is provided for each context to store excess attribute parameter pairs which cannot be stored in the node dictionary 24, link dictionary 26 or context dictionary 29 entries relating to various nodes, links or contexts due to fixed sized records. Each node dictionary 24, link dictionary 26, or context dictionary 29 entry which is filled to capacity with attribute parameter pairs includes a pointer to an entry in the entity attributes dictionary 30 where an additional attribute parameter pair is stored. Entries in the entity attribute dictionary relating to the same node, link or context are also linked by pointers to form a linked list which may be traversed to determine all attribute value pairs for the node, link or context not otherwise stored in the node, link or context dictionary entry for the node, link or context.

Character strings are used for attribute names, attribute values, UNIX system directory prefixes, and user names, and each string is assigned a unique string index parameter value. The string index table 44, along with a string hash table 42 and a string table 46 of FIG. 3, are provided to convert from character strings to string index parameter values and vice versa. One global copy of each of these files is accessed by all contexts. The string hash table 42 implements a character string hashing technique providing a pointer to an entry in the string index table 44 where a string index number relating to a hashed character string is stored. The string table 46 is utilized to convert a string index number to a corresponding character string.

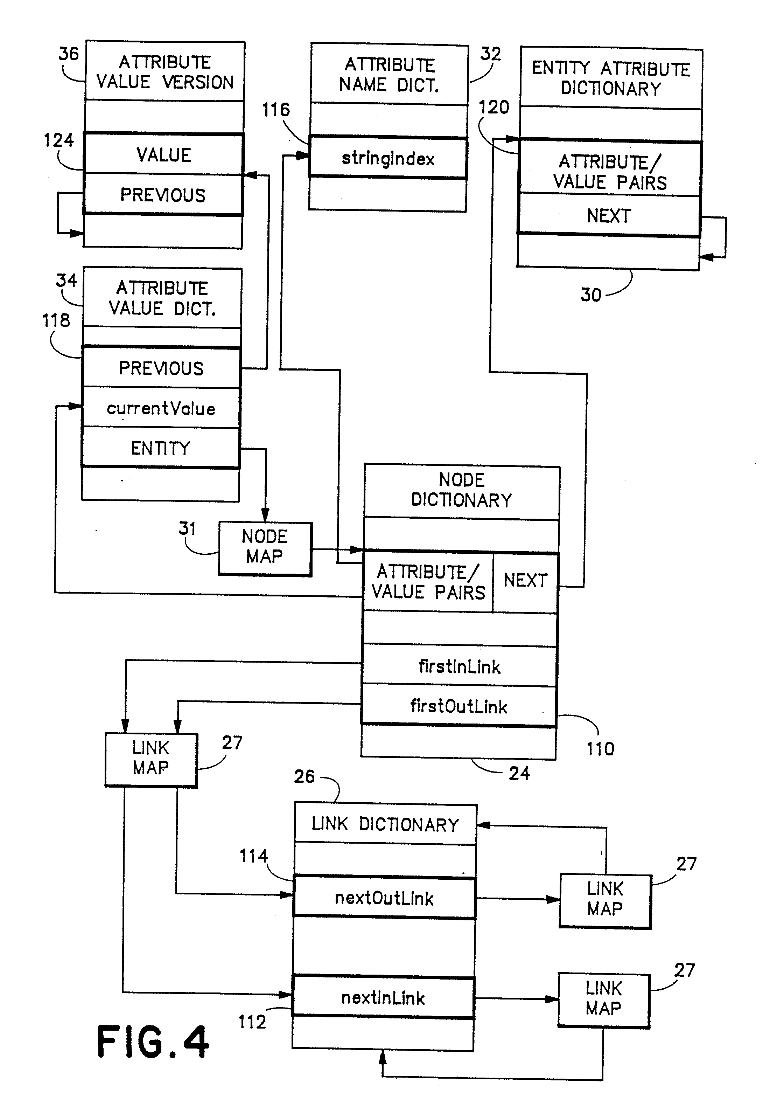

Relationships between the node dictionary 24 and various other files of FIG. 3 are illustrated in FIG. 4. A selected portion of the parameters contained in one entry 110 of node dictionary 24 is shown including the firstInlink parameter which maps via link map table 24 into an entry 112 in the link dicitonary 26. Entry 112 describes the first link of the "in link" list of all links pointing to the node described by entry 110 and contains the nextInlink parameter which maps via the link map table 24 into the next link dictionary entry of the in link list. Similarly the firstOutlink parameter of the node dictionary entry 110 maps into an entry 114 in the link dictionary 26 comprising the first entry of the linked list of "out link" entries describing all links pointing from the node described by entry 110. Entry 114 includes the nextOutlink parameter which maps into the next link dictionary 26 entry on the out link list.

One attribute parameter pair (labeled "attribute" and "value") of the node dictionary 24 entry 110 is illustrated in FIG. 4. The attribute poriton of the pair points to an entry 116 of the attribute name dictionary 32 containing the stringIndex parameter associated with the name of the attribute. The value portion of the pair maps via node map 31 into an entry 118 of the attribute value dictionary 34. As discussed hereinabove, when a node is assigned more attribute parameter pairs than can be stored in the node dictionary 24 entry for the node, the excess attribute parameter pairs are stored in the entity attribute dictionary 30. In the example of FIG. 4, a "next" pointer in node dictionary entry 110 points to an entry 120 of the entity attribute dictionary containing a next group of attribute pairs. Entry 120 also include a "next" pointer to another attribute dictionary entry containing an additional group of attribute pairs associated with the node described by node dictionary entry 110.

The attribute value dicitonary 34 entry 118 referenced by the value pointer in node dictionary entry 110 includes the currentValue parameter containing the integer value or the stringIndex number related to the attribute value name. Entry 118 further includes a "previous" pointer to an entry 124 containing an attribute value referencing a previous version of the attribute value. Entry 124 also contains a "previous" pointer linking an additional attribute value version file 36 entry associated with an earlier version of the attribute value. The attribute value dictionary entry 118 also contains an entity parameter which points back via node map 31 to the node dictionary entry 110.

The attribute value dictionary 34, in conjunction with the attribute value version file 36, permit the machine 14 to determine every node having an attribute of a selected value, to change the nature of an attribute value, and to determine previous versions of each attribute value. For instance, an "ownership" attribute might be created for each node to indicate the name of a person responsible for approving changes to data in the node. If Smith is responsible for changes to a set of nodes, then the "ownership" attribute for each node in the set may be assigned a value of "Smith". Assuming that the node corresponding to entry 110 is one node of the set, then "Smith" is the current value stored in entry 118 of attribute value dictionary file 34. If ownership responsibility for the set is transferred to Jones, then it is necessary to change the attribute value for all nodes in the set. A new attribute value version file 36 record similar to record 124 is created to store the old value "Smith" and the "previous" pointer in this record is adjusted to point to record 124. The currentValue parameter in record 118 is changed to "Jones" and the "previous" pointer in record 118 is changed to point to the new record in the attribute value version file 36 containing the "Smith" value.

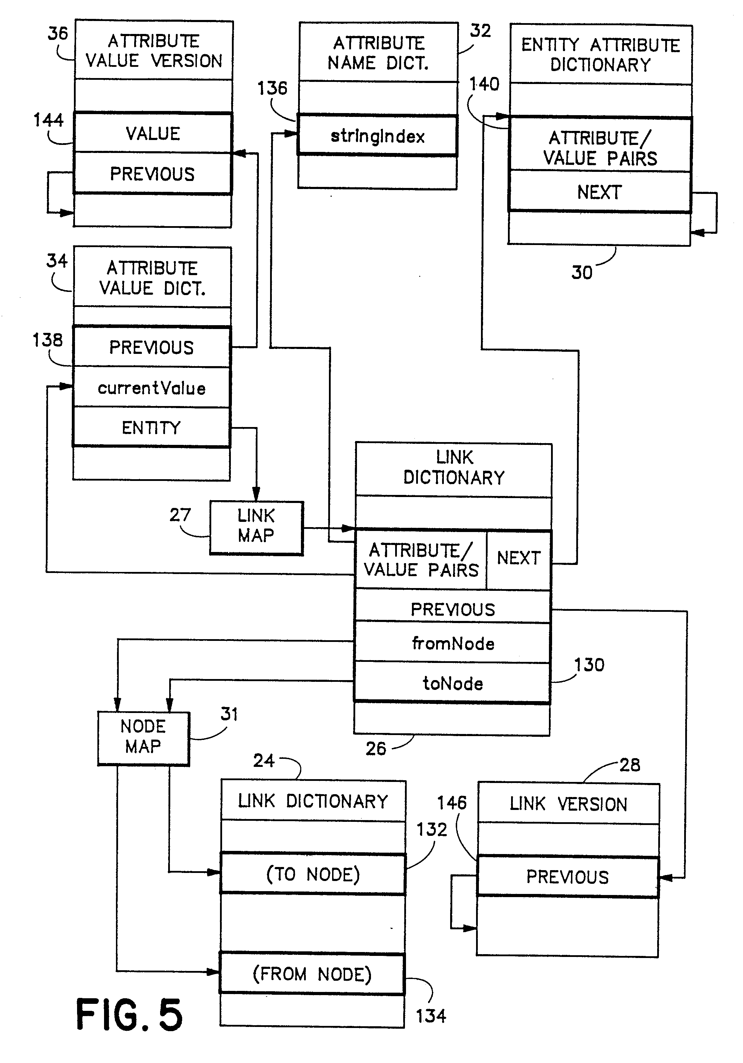

Relationships between the link dictionary 26 and various other files are illustrated in FIG. 5. A selected portion of the parameters for one entry 130 of link dictionary 26 is shown including the toNode parameter which maps through the node map 31 into an entry 132 in a node dictionary 24 describing the "to node" associated with the link. The fromNode parameter of entry 130 which maps through the node map 31 into an entry 134 in a node dictionary 24 which describes the "from node" associated with the link. For links between nodes of different contexts, the entry 132 will be in a node dictionary 24 associated with a context other than the context in which the node resides. One link attribute parameter pair of the link dictionary 26 entry 130 is illustrated. An attribute portion of the pair points to an entry 136 of the attribute name dictionary 32 containing the stringIndex parameter associated with the name of the link attribute. The value portion of the pair points to an entry 138 of the attribute value dictionary 34. A next pointer in entry 130 points to an entry 140 of the entity attribute dictionary 30 containing a next group of attribute pairs. Entry 140 also includes a next pointer to another entity attribute dictionary 30 entry containing an additional group of attribute parameter pairs associated with the link described by link dictionary entry 130 via link map 27.

The attribute value dictionary 34 entry 138 includes the currentValue parameter containing the integer value or the stringIndex of the link attribute value name. Entry 138 further includes the previous pointer to an entry 144 containing an attribute value referencing a previous version of the link attribute value. Entry 144 contains another previous pointer linking an additional attribute value version file 36 entry associated with a still earlier version of the link attribute value. The attribute value dictionary entry 138 contains the entity parameter pointing back to the node dictionary entry 130.

The link dictionary 26 entry 130 of FIG. 5 is further provided with a previous pointer to an entry 146 of link version file 28 containing information about a previous version of the link. Entry 146 contains a previous parameter for pointing to an entry of the link version file 28 containing information regarding a still earlier version of the link.

Referring to FIG. 3, a transaction log file 41 is provided for each context to store information regarding changes made to the files of FIG. 3 when the machine is carrying out an operation requested by a user. The transaction log enables the machine 14 to "undo" any changes made to the other files of FIG. 3 if for any reason a requested operation is improperly terminated. Once an operation is successfully completed, the information stored in the transaction log is discarded.

Appendix I contains software listings of pro grams according to the present invention for controlling various data files depicted in FIG. 3. Referring to FIG. 3 and Appendix I, and f__nodeFile program 47 buffers input and output access to the node contents files 22 while an f__nodes program 43 buffers access to the node dictionary 24. A program f__links 49 buffers input and output access to the link dictionary file 26. An f__mapping program 51 and an f__context program 53 buffer access to the link map file 27 and the node map file 31 and an f__context program 53 buffer access to the context dictionary file 29. The program f__linkHist 48 buffers access to the link version file 28 while an f__entAtt program 50, an f__attDef program 52, an f__attValue program 54 and an f__attHist program 56 buffer access to the entity attribute dictionary 30, the attribute name dictionary 32, the attribute value dictionary 34 and the attribute value version file 36, respectively. The f__strings program 60 buffers access to the string hash table 42, the string index table 44 and the string table 46. A direct program 45 and a fileMan program 55 provide generic file access routines for system directories and machine dependent file system interface utilities which are employed by the above named file access buffer programs.

Appendix I also contains listings of a nodel program 62, an archive program 64 and an lcs program 66 which provide support routines for accessing and manipulating the contents of node dictionary files 24 and node contents files 22 of FIG. 3 via utilities in the f__nodes program 43 and the f__nodeFile program 47. Each node contents file 22 contains the current version of a node and also contains version history data indicating the changes required to the current version in order to produce prior versions of an archive node. The nodel program 62 controls changes to the data stored in the node contents files 22 and the archive program 64 controls the input and output of version history data stored in the node contents files. The lcs program 66 produces the version history data to be stored in the node contents files 22 by comparing a new version of a node provided by a user with the most recently stored version.

Appendix I also contains a link1 program 63 and an attribute1 program 65. The link1 program supports routines for accessing and manipulating link data employing utilities in the f__links program 49 and the f__linkHist program 48 to access the link versions file 28 and the link dictionary 26 of FIG. 3 The attribute1 programs supports routines for accessing and updating attribute data utilizing the utilities in the f__attDef program 52, the f__attValue program 54, the f__attHist program 56, and the f__entAtt program 50 to access the attribute name dictionary 32, the attribute value dictionary 34, the attribute value version file 36 and the entity attribute dictionary 30.

A strings program 68 and a log program 70 are also included in Appendix I. The strings program uses the string tables 42, 44, and 46 via utilities in the f__strings program 60 to find and return a string index relating to a given input character string. The strings program also creates new index numbers for new character strings. The attribute1 program 65 employs the strings program for handling strings associated with attributes. The log program 70 controls input and output to the transaction log file 41 and implements a recovery mechanism for improper terminations of a graph access by a user, making use of utilities in the f__ mapping program 51 and the FileMan program 55 to access the link map 27 and the node map 31. The log program 70 also synchronizes multi-user access to a graph.

Appendix I also contains listings for a set of programs according to the present invention for implementing various operations requested by users. The operations, listed below, are described according to the following notation:

Operation Name:

$\text{operand}_1 \times \text{operand}_2 \times ... \times \text{operand}_n \longrightarrow \text{result}_0 \times \text{result}_1 \times ... \times \text{result}_m$

wherein n is greater than or equal to 1 and m is greater than or equal to 0. An operand is a set of information provided by the user while a result is a set of information returned to the user by the data management machine. Each operand and each reult has a "domain" of values as follows:

Operand or Result:    Domain:

Attribute:              an attribute name (a character
                        string).

AttributeIndex:         unique identification number
                        for an attribute name.

Boolean:                true/false indicator.

Contents:               the contents of a node.

ContentType:            the format of data in a node.

ContextId:              a unique identification for a
                        currently accessed context within
                        a currently accessed graph.

Difference:             a deletion, insertion or
                        replacement instruction.

Directory:              a valid UNIX file directory name.

Explanation:            explanatory text.

LinkIndex:              an identification for a link.

Machine:                an identification for an individual
                        computer in a compu-ter network.

NodeIndex:              an identification for a node.

Position:               a number representing the posi-tion
                        of a selected piece of data in a node.

Predicate:              a Boolean formula in terms of
                        attributes and their values.

ProjectId:              a unique identification for a graph.

Protections:            one of a plurality of file
                        protection modes.

Time:                   a non-negative integer repre-sen-
                        tation of a given data and time.

Value:                  an attribute value.

Referring again to FIG. 3, a graph program 72 listed in Appendix I employs utilities in the fileMan program 55 and in the attribute1 program 65 to implement the following operations affecting the directory:
createGraph:
Directory x Protections --> ProjectId x Time x ContextId
The operation createGraph creates a new "empty" graph in a specified UNIX directory (Directory) using a specified UNIX file protection mode (Protections). A graph is initially "empty" in the sense that it does not yet contain any nodes. The createGraph operation returns to the user invoking the operation a ProjectId parameter comprising a unique identification for the graph, a Time parameter indicating the creation time of the graph, and a ContextId parameter comprising a unique identification for the root context of the graph. The user thereafter must specify the ProjectId and Directory parameters whenever opening the new graph in order to identify the graph to be opened and must specify the contextId whenever accessing a particular context.

destroyGraph:

ProjectId x Directory → -

The operation of destroyGraph destroys an existing graph located in Directory. The ProjectId must have the same value as returned by the createGraph operation that created the graph in the first place. The destruction of a graph includes the destruction of all files of FIG. 3 relating to the graph.

openGraph:

ProjectId x Machine x Directory → ContextId

A user invokes the openGraph operation to access (open) an existing graph located in a specified directory (Directory) for a storage device maintained by a selected computer (Machine) of a multiple computer sytem. The value of the ProjectId parameter must be the same as returned by the createGraph operation that created the graph. "ContextId" is the unique identifier for the root context of the graph.

A context program 73 of FIG. 3, listed in Appendix I, includes routines for creating, deleting and accessing contexts utilizing the f__context program 53 to access the context dictionary 29 and the attributeI program to control context attributes. The context program provides for the following operations:

createContext:

Protections → ContextId

This operation creates a new context as a direct descendant of the current context from which the operation was initiated. The operation returns the ContextId for the new context and opens the new context for subsequent operations.

openContext:

ContexId → -

This operation opens a pre-existing context given by ContextId.

destroyContext:

ContextId → -

This operation removes the context given by ContextId as a descendant of its parent context. ContextId must not be the root context or the currently open context from which the operation is invoked and must not have any existing children contexts.


compactContext:

ContextId x Boolean → -

This operation removes (destroys) old versions of nodes, lines and attributes in the context given by ContextId. If Boolean is true, all versions except current versions are removed. If Boolean is false, only versions between the current versions and the last compacted version are removed.

mergeContext:

fromContextId x toContextId x (NodeId x Time)* →

This operation extends the context given by toContextId to include those nodes in the context identified by fromContextId represented by (NodeId x Time)* and their attached links. If Time is zero then a NodeId refers to the current version of the node. (The * notation indicates that one or more of the operands may be specified.)

checkForDifferences:

from ContextId x toContextId x (NodeIndex x Time)* → (LinkIndex x Time)* → Conflicts

This operation checks the context given by toContextId for differences with those nodes and links from fromContextId represented by (NodeIndex x Time)* and (LinkIndex x Time)*. If a Time is zero then a NodeIndex or LinkIndex refers to the current version of the node or link. toContextId must be either a parent or child context of fromContextId. The operation returns in Conflicts all nodes and links in ContextId which conflict in any way.

getParentOfContext:

ContextId → ContextId

This operation returns the contextId of the parent context of the context identified by ContextId.

getDescendandtsOfContext:

ContextId x Time → ContextId*

This operation returns the contextId(s) of the descendant context(s) of the context identified by ContextId as of the time indicated by the Time parameter.

A node0 program 78 listed in Appendix I provides interface routines for user application software which allow the user software to create, delete and access nodes, making use of utilities in the nodeI program 62 and the attribute1 program 65. The operations supported by the node0 program include the following:

addNode:

ContextId x Protections x Boolean x ContentType → NodeIndex x Time

Once a user has opened a context, the user may add a new empty node by invoking the addNode operation. If Boolean is true, then a version history is maintained for the node, i.e., the node is maintained as an archive node. If Boolean is false, the node is considered to be a file node and version histories are not maintained. Once the node is created, addNode returns the NodeIndex and Time parameters for the new node. Thereafter, a user may invoke another operation, "modifyNode" (described hereinbelow), to fill the node with data. The Protections parameter specifies access privileges and the ContextId parameter specifies the context of the new node.

deleteNode:

ContextId x NodeIndex → -

The deleteNode operation removes a node identified by NodeIndex from the context identified by ContextId along with all links into or out of the deleted node. In the case of a file node, the node contents file 22 of FIG. 3 is removed from storage while in the case of an archive file, the node is marked "deleted" and the current contents portion of the node contents file and the node history portion of the node contents file are retained so that previous versions of the node may be reconstructed.

A link0 program 80 listed in Appendix I provides interface routines for user application softwater which allow the user application software to create, delete and access links, making use of utilities in the link1 program 63 and in the attribute1 program 65. The operations supported by the link0 program include the following:

addLink:

$LinkPt_1$ x $LinkPt_2$ → LinkIndex x Time

The addLink operation creates a new link between two nodes. Referring to FIG. 6, illustrating a link between two node contents files, the data is stored in each node contents file as a sequence of bytes. A link connects one selected byte 100 in a "from" node 102 to another selected byte 104 in a "to" node 106. A link point (LinkPt), the particular byte of the sequence of bytes in a node contents file where a link is attached, is specified as follows:

LinkPt = ContextId x NodeIndex x Position x Time x Boolean

where ContextId identifies the context of the node, NodeIndex identifies the node, Time identifies the version of the node, and Position identifies the byte sequence position within the node to which the link points. If Boolean is true, the link point is the link destination, and if Boolean is false, the link point is the link source. A version history of the link is maintained if either link point ($LinkPt_1$ or $LinkPt_2$) refers to an archive node. The addLink operation returns LinkIndex, the unique identifier for the new link, and the creation time (Time) for the link.

copyLink:

ContextId x LinkIndex1 x $Time_1$ x Boolean x LinkPt → LinkIndex2 x Time

The copyLink operation creates a new link in the text given by ContextId between two nodes where one end of the link is identical to that of an existing link identified by LinkIndex1 and $Time_1$. This end of the existing link is taken to be one end of the new link while the other end of the new link is identified by LinkPt. If Boolean is true then the source of the new link point is identified by LinkIndex1 and the destination is identified by LinkPt. If Boolean is false LinkIndex1 identifies the destination of the new link and LinkPt identifies the source. The copyLink operation returns a LinkIndex2 identifier for the new link and its creation time (Time).

deleteLink:

ContextId x LinkIndex → -

The deleteLink operation removes the link identified by LinkIndex from the context given by ContextId but does not delete link version histories.

Referring again to FIG. 3, a linear program 74, also listed in Appendix I, makes use of a buffer program 84 listed in Appendix I to implement the following operation:

linearizeGraph:

ContextId x NodeIndexl x Time x $Predicate_1$ x $Predicate_2$ x $AttributeIndex_1{}^m$ x $AttributeIndex_2{}^n$ → (NodeIndex x $Value^m$)* x (LinkIndex x $Value^n$)*

This operation performs the previously discussed "traversal" search, returning a linked subgraph of a version of the currently accessed graph identified by Time. The *symbol indicates more than one of the indicated results may be returned. the subgraph contains every node of the graph which satisfies $Predicate_1$ and which can be reached from a starting node (identified by NodeIndex1) in a particular context (identified by ContextId) by traversing only links satisfying $Predicate_2$ and passing through other nodes satisfying $Predicate_1$. A "predicate" is an expression which indicates a selected set of node or link attributes along with one or more values associated with each attribute. To "satisfy" a predicate, a node or a link must possess the attribute values indicated by the predicate. Node and link predicates are expressed according to the following grammar:

```
predicate   -->  expression

expression -->  -expression
           -->  (expression)
           -->  term
           -->  expression & expression
           -->  expression | expression
term       -->  attribute relop value
           -->  'true'
           -->  'false'

relop      -->  '<'
           -->  '>'
           -->  '≤'
           -->  '≥'
           -->  '='
           -->  '≠'

attribute  -->  "string"

value      -->  integer|"string"|'?'
```

In the above grammar the character "?" represents any value. Assuming, for instance, that nodes have an attribute named "type" with a value "text" and an attribute named "year", a typical Predicate$_1$ expression according to the above grammar reads as follows:

type - text & year > 1985.

This predicate indicates that only text nodes written after 1985 are to be included in the subgraph. The subgraph is returned by the linearizeGraph operation as a set of NodeIndex and LinkIndex values identifying the nodes and links of the subgraph. The linearizeGraph operation also returns the values (Value$_m$ and Value$_n$) of specified attributes associated with the nodes and links of the subgraph, a set of m node attributes being specified by AttributeIndex$_{1m}$ and a set of n link attributes being specified by AttributeIndex$_{2n}$. In performing the linearizeGraph operation, the linear program 74 obtains attribute values for the nodes and links by invoking an attribute program 82 also listed in Appendix I and utilizes a "search" program 75, also listed in Appendix I, to evaluate the attributes of the node and links to determine if Predicate$_1$ or Predicate$_2$ is satisfied. The linear program 74 also utilizes a bitMap program 77, a data structure for efficiently managing large number sets.

A pair of programs 76, "FilterN" and "FilterC", and a "hunt" program 79 of FIG. 3 (listed in Appendix I) make use of the search program 75, a "reSearch" program 81, the buffer program 84 and the bitMap program 77 (also listed in Appendix I) to carry out the following operations:

GetGraphQuery:

ContextId x Time x Predicate$_1$ x Predicate$_2$ x AttributeIndex$_{1m}$ AttributeIndex$_{2n}$ → (NodeIndex x Value$_m$)* x (LinkIndex x Value$_n$)*

This operation performs the previously described "query" search, returning a subgraph of the cur rently open graph within the context given by ContextId as it existed at time Time. The subgraph includes all nodes satisfying Predicate$_1$ and all links satisfying Predicate$_2$ connecting these subgraph nodes. Predicate$_1$ and Predicate$_2$ follow the grammar described hereinabove for the predicates associated with the linearizeGraph operation. The subgraph returned by the getGraphQuery operation comprises a set of NodeIndex and LinkIndex values identifying the nodes of the graph satisfying Predicate$_1$ and any interconnecting links satisfying Predicate$_2$. The operation also returns the values (Value$_m$ and Value$_n$) of specified attributes associated with the nodes and links of the subgraph, the node attributes being specified by AttributeIndex$_{1m}$

15

0 270 360

and the link attributes being specified by $AttributeIndex_2{}^n$.

getContextQuery:

Time x Predicate x $AttributeIndex^m$ → (ContextId x $Value^m$)

This operation returns the ContextId of each context satisfying Predicate and also returns values ($Value^m$) for each specified AttributeIndex for each context satisfying Predicate.

makeSearch:

String → -

This operation parses a regular expression String and builds a finite stat machine that is optimized for finding occurances of the regular expression. The state machine is utilized during the following searchContents operation.

searchContents:

ContextId x ($NodeIndex_1$ x $Time_2$ x $Position_1$)* x $AttributeIndex^m$ → ($NodeIndex_2$ x $Time_3$ x $Position_2$ x Length x $Value^m$)*

This operation searches through the contents of each of the versions from $Time_1$ to $Time_2$ of each node $NodeIndex_1$ within the context given by ContextId starting at offset $Position_1$ to find the regular expression defined by the most recent makeSearch operation. The searchContents operation returns a list of nodes ($NodeIndex_2$) which contain the expression, including the position ($Position_2$) of the first occurance of the expression in each node, the version time ($Time_3$) of the node, the value(s) of each node attributes indentified by AttributeIndex, and the number of bytes (Length) in the occurance of a match.

The node0 program 78, listed in Appendix I, also carries out the following operations affecting nodes:

openNode:

ContextId x NodeIndex x $Time_1$ x $AttributeIndex_1{}^m$ x $AttributeIndex_2{}^n$ → Contents x $Value^m$ x $Time_2$ x (LinkPt x $Value^n$)*

If $Time_1$ is zero, the openNode operation returns the contents (Contents) and current version time ($Time_2$) of an existing node identified by NodeIndex of the context identified by ContextId. If $Time_1$ is non-zero, openNode returns the latest version of the contents of the node as of $Time_1$ and the version time ($Time_2$) of the returned contents. The operation also returns the values ($Value^m$) of the node attributes of the existing node identified by $AttributeIndex_1{}^m$, the LinkPt identification of each link connected to the node, and the values ($Value^n$) of the link attributes identified by $AttributeIndex_2{}^n$. The openNode operation accesses the current version of the node in a node contents file 22 by calling the node1 program 62.

modifyNode:

ContextId x NodeIndex x Time x Contents x (LinkIndex x Position)* → --

The modifyNode operation is invoked to store a new version (Contents) of an existing node (NodeIndex) of a particular context (ContextId), the node version being identified by Time. Unless the value of Time is equal to the current version of the node, the modifyNode operation returns a conflict indication to the user and does not store the new node version. The operation modifyNode also repositions the starting or ending point (Position) in the node of each existing link indentified by LinkIndex. The node0 program 78 uses the node1 program 62 to store the new node contents. The node1 program in turn makes use of the archive program 64 and the lcs programs 66 to create a new version history when the node being modified is an archive node. The node0 program 78 also calls the f_nodes program 43 to modify entries in the node dictionary 24 to reflect the indicated changes in link points.

compactNode:

ContextId x NodeIndex x Boolean → -

This operation removes old versions of the node identified by NodeIndex in the context identified by ContextId, and also removes old versions of links and attributes. If Boolean is true, compactNode removes all previous versions of the node, but if Boolean is false, the operation removes only those prior versions created since the node was last compacted.

getNodeTimeStamp

ContextId x NodeIndex → Time

This operation returns the current version time (Time) for the node identified by NodeIndex in the contect identified by ContextId.

GetNodeVersions:

ContextIds x NodeIndex → $Version_1$* x $Version_2$*

The getNodeVersions operation returns the version history for a node (NodeIndex) of a context (ContextId) including "major versions" identified by $Version_1$* and "minor versions" identified by $Version_2$*. A "Version" result is defined as follows:

Version = Time x Explanation

where Time identifies the version and Explanation is text explaining the nature of the version (i.e., whether it is a major or minor version).

Major versions are updates to the contents of the node while minor versions are other changes relating to the node, such as relating to adding a link or changing an attribute value, but which do not change the contents of the node. The node0 program 78 utilizes the f_nodes program 43 to acquire version history data from the node dictionary.

getNodeDifferences:

ContextId x NodeIndex x $Time_1$ x $Time_2$ → Difference*

16

The getNodeDiffenences operation returns the "Difference(s)" between the $Time_1$ and $Time_2$ versions of the node identified by NodeIndex in the context identified by ContextId, the differences including a set of deletion and insertion directions for changing the $Time_1$ version to the $Time_2$ version. The node0 program uses the node1 program 62, the archive program 64, and the lcs program 66 to acquire the version histories from the node contents files 22.

The "link0" program 80, listed in Appendix I, also carries out the following operations relating to links:
getToNode:
ContextId x LinkIndex x $Time_1$ → NodeIndex x $Time_2$

The getToNode operation returns the identification NodeIndex and version time ($Time_2$) of a destination node of the $Time_1$ version of a link identified by LinkIndex in the context identified by ContextId. The link0 program 80 makes use of the f__links program 49 and the f__linkHist program 48 to obtain the LinkIndex numbers from the link dictionary 26 and the link version file 28.
getFromNode:
ContextId x LinkIndex x $Time_1$ → NodeIndex x $Time_2$

The getFromNode operation returns the identification NodeIndex and version time ($Time_2$) of a source node of a link identification by LinkIndex in the context identified by ContextId. The version time of the link is identified by $Time_1$.

A set of programs 82 ("attributeO", "attributeN", "attributeC", and "attributeL") carry out the following operations:
getAttributes:
ContextId x Time → (Attribute x AttributeIndex)*

The getAttributes operation returns all of the Attributes and the associated AttributeIndexes existing at a given time (Time) for context identified by ContextId. In order to acquire AttributeIndex numbers associated with nodes and links, the attributeO program 82 invokes the f__attDef program 52 which acquires the AttributeIndex numbers from the attribute name dictionary 32. The attribute program 82 calls the strings program 68 to determine the attribute name (Attribute) associated with each AttributeIndex number.
getAttributeValues:
ContextIds x AttributeIndex x Time → Value*

The getAttributeValues operation returns a list of the values (Value*) which have been assigned to a selected attribute identified by AttributeIndex for a context identified by ContextId at a given time (Time). The attributeO program 82 employs the f__attValue program 54 and the f__attHist program 56 to locate attribute value string index data stored in the attribute value version file 36 and uses the strings program 68 to convert the attribute value string index data to the character strings representing the attribute values associated with the selected AttributeIndex.
getAttributeIndex:
ContextId x Attribute → AttributeIndex

The getAttributeIndex operation of the attribute program makes use of the strings program 68 to return a unique string index identification (AttributeIndex) for an attribute name associated with the context identified by ContextId. If the attribute is new, the operation assigns a new attribute index value to it.
setNodeAttributeValue:
ContextId x NodeIndex x AttributeIndex x Value → -

The set NodeAttributeValue assigns a new value to an attribute (indicated by AttributeIndex) of the current version of a node identified by NodeIndex and ContextId and assigns a value (Value) to the attribute. If the node identified by NodeIndex is an archive node, then a new version of the attribute value is created.
getNodeAttributeValue:
ContextId x AttributeIndex x Time → Value

The getNodeAttributeValue operation returns a value (Value) for an attribute identified by AttributeIndex at a given time (Time) for a given node identified by NodeIndex and ContextId using the f__nodes program 43 to access the node dictionary 24.
deleteNodeAttribute:
ContextId x NodeIndex x AttributeIndex → -

The deleteNodeAttribute operation deletes the attribute identified by AttributeIndex for the node identified by NodeIndex and ContextId using the f__nodes program 43 to modify the node dictionary 24.
getNodeAttributes:
ContextId x NodeIndex x Time → (Attribute x AttributeIndex x Value)*

The getNodeAttributes operation returns all of the attribute names (Attribute), their corresponding string index identifiers (AttributeIndex), and their values (Value) as of a selected time (Time) for a selected node (NodeIndex) of a context identified by ContextId.

The AttributeIndex is obtained from the node dictionary 24 through the f__nodes program 43 and ValueIndex parameters for the attributes are obtained from the attribute value dictionary 34 through the f__attValue program 54. The ValueIndex and AttributeIndex numbers thus acquired are converted into character strings (Attribute and Value) by calls to the strings programs 68.
setLinkATtributeValue:
ContextId x LinkIndex x AttributeIndex x Value → -

The setLinkAttributeValue operation sets the value (Value) of a selected attribute (AttributeIndex) of a link

17

(LinkIndex) of the context and ContextId, by adding an attribute/value pointer pair to the link dictionary 26. To do so, the attributeL program calls the link0 program 80 which accesses the link dictionary 26 through the f__links program 49. If the link is attached to an archive type node (i.e., if version histories of the node are to be maintained) a new version of the attribute value is created in the attribute value dictionary 34 accessed through the f__attValue program 54.

getLinkAttributeValue:

ProjectId x ContextId x LinkIndex x AttributeIndex x Time → Value

The getLinkAttributeValue operation returns the value (Value) of an attribute identified by AttributeIndex for a selected version (Time) of a link identified by LinkIndex of the context identified by ContextId. The value pointer assocciated with the attribute is obtained from the link dictionary 26 by a call to the link0 program 80 and the value of the attribute is then obtained from the attribute value dictionary 34 by a call to the f__attValue program 54.

deleteLinkAttribute:

ContextId x LinkIndex x AttributeIndex → -

The deleteLinkAttribute operation deletes from the link dictionary 26 the attribute indicated by AttributeIndex for the link of the context and ContextId, the link being referenced by LinkIndex.

getLinkAttributes:

ContextId x LinkIndex x Time → (Attribute x AttributeIndex x Value)*

The getLinkAttributes operation returns the attribute name (Attribute), the string index for the attribute (AttributeIndex), and the value (Value) of each attribute for a link (LinkIndex) of the context identified by ContextId, the link version being identified by Time. In performing this operation the attributeL program 82 makes calls to the link0 program 80 to acquire the string index numbers from the link dicitionary 26 or link version file 28, and makes calls to the f attValue program 54 and the f__attHist program 56 to acquire ValueIndex numbers referencing the attribute values. The strings program 68 is also utilized to return the attribute and value character strings reference by the string index numbers.

setContextAttributeValue:

ContextId x AttributeIndex x Value → -

The setContextAttributeValue operation sets an attribute (AttributeIndex) for a context (ContextId) to a value indicated by the Value parameter.

deleteContextAttribute:

ContextId x AttributeIndex → -

The deleteContextAttribute operation deletes the attribute (AttributeIndex) for a particular context (ContextId).

getContextAttributeValue:

ContectId x Time x AttributeIndex → Value

This operation returns the value (Value) for an attribute (AttributeIndex) of a context (ContextId) at a particular time (Time).

getContextAttributes:

ContextId x Time → (Attribute x AttributeIndex x Value)*

The getContextAttributes operation returns all of the attributes (Attribute), their respective identifier (AttributeIndex), and their values (Value) that existed for a particular context (ContextId).

Many of the previously dicussed programs invoke an "errors" program 83, listed in Appendix I, whenever an error is encountered and the errors program returns an error message to the user.

The data management machine of the present invention is adapted to deal effectively with the problem of locating nodes of interest in a large computerized data storage system. The above described operations permit the machine to organize nodes and links into graphs comprising nodes interconnected by links wherein both the nodes and the links may be assigned user-definable attributes, and to subdivide graphs into contexts which also may be assigned user-definable attributes. The division of the graph into identifiable contexts and the ability to merge nodes and links from one context to another helps to reduce conflicts which arise when more than one user attempts to modify a node.

The getGraphQuery, linearizeGraph, getContextsQuery, and searchContents operations make use of the assigned node, link and/or context attributes to retrieve subgraphs containing only those nodes and links of interest to a user. The subgraphs make it easier for a user to locate particular contexts or nodes within contexts having particular attribute values (i.e., subject matter, author, etc.) without the knowing context or node names by excluding from the subgraph irrelevant contexts and/or nodes which do not share the same attribute values. This reduces the number of nodes the user must persue to find a particular node. The subgraphs also make it easier for a user to locate nodes which are related to a selected node in some particular way by eliminating nodes linked to the selected node by links which do not have selected link attribute values. The combination of node, link and context attribute assignment and search capability of the machine allows highly selective user definition of nodes and links to be included in a subgraph, thereby enabling a user to more easily locate and determine the nature of nodes and their interrelationships than is possible when only node attributes or only link attributes may be assigned.

The above described operations enable the data management machine of the present invention to document changes to contexts, nodes and links by maintaining context, node and link version histories permitting the reconstruction of a graph as it existed at a previous time. The machine is also adapted to maintain attribute histories documenting changes to attribute values associated with contexts, nodes and links.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spririt and scope of the invention.

## Claims

1. A data management method for implementation by data processing means for receiving commands and data sequences from a user, for storing nodes in data storage means, each node comprising a separate data sequence, for reading nodes stored in said data storage means, and for transmitting data to said user, the method comprising the steps of:
storing nodes in said data storage means, each node comprising a separate data sequence received from said user;
identifying each other of the stored nodes as being included in one of a plurality of contexts wherein each context comprises a separate group of the stored nodes; and
receiving from said user and storing in said data storage means link data referencing at least one pair of said stored nodes as having a relationship.

2. The data management method according to claim 1 wherein one node of at least one pair of said stored nodes referenced as having a relationship is included in one of said contexts while another node of said at least one pair of said stored nodes is included in another of said contexts.

3. The data management method according to claim 1 further comprising the steps of:
receiving from said user a first data sequence and a command indicating said first data sequence is to replace a second data sequence comprising a particular node stored in said data storage means;
comparing said first data sequence with said second data sequence to determine a set of differences therebetween;
modifying said first node in accordance with said first data sequence; and
storing in said data storage means node history data representing said set of differences.

4. The data management method according to claim 1 wherein the step of identifying each of the stored nodes as being included in one of a plurality of contexts comprises the substep of storing in said data storage means context data indicating which of said stored nodes are included in each of said contexts.

5. The data management method according to claim 4 further comprising steps of:
creating second nodes by copying first nodes included in one of said plurality of contexts; and
storing in said data storage means context data indicating that said second nodes are included in another of said plurality of contexts.

6. The data management method according to claim 5 comprising the step of creating second link data referencing one of said second nodes as having a relationship to another node by copying first link data referencing one of said first nodes as having a relationship to said another node, wherein said one of said second nodes was created by copying said one of said first nodes.

7. The data management method according to claim 4 further comprising the steps of:
receiving from said user a first data sequence and a command indicating said first data sequence is to replace a data sequence comprising one of said first nodes;
comparing said first data sequence with said data sequence comprising said one of said first nodes to determine a first set of differences therebetween;
storing in said data storage means first node history data representing said first set of diffeneces;
receiving from said user a second data sequence and a command indicating said second data sequence is to replace a data sequence comprising one of said second nodes;
comparing said second data sequence with said data sequence comprising said one of said second nodes to determine a second set of differences therebetween; and
storing in said data storage means first node history data representing said second set of differences.

8. The data management method according to claim 1 further comprising the steps of:
receiving from said user link attribute data indicating at least one link attribute characterizing said relationship; and
storing said link attribute data in said data storage means.

9. The data management method according to claim 8 further comprising the steps of:
reading link data and link attribute data stored in said data storage means, and
determining from the data read which of said at least one pair of stored nodes have a relationship characterized by a particular link attribute.

10. The data management method according to claim 1 further comprising the steps of:
receiving from said user context attribute data indicating at least one context attribute characterizing at least one of said contexts; and
storing said context attribute data in said data storage means.

11. The data management method according to claim 10 further comprising the steps of:

reading context attribute data stored in said data storage means; and

determining from the data read which of said plurality of contexts are characterized by a particular context attribute.

12. The data management method according to claim 1 further comprising the steps of:

receiving from said user node attribute data indicating at least one node attribute characterizing as least one of said stored nodes; and

storing said node attribute data in said data storage means.

13. The data management method according to claim 12 further comprising the steps of:

reading node attribute data stored in said data storage means; and

determining from the read data which of said stored nodes are characterized by a particular node attribute.

14. The data management method according to claim 1 further comprising the steps of:

receiving from said user link attribute data indicating at least one link attribute characterizing said relationship and node attribute data indicating at least one node attribute characterizing as least one of said stored nodes;

storing said node attribute data and said link attribute data in said data storage means;

reading link data, link attribute data, and node attribute data stored in said data storage means;

determining from the data read a subset of said stored nodes, wherein each node of said subset of stored nodes is characterized by a particular node attribute; and

determining from the data read pairs of said subset of stored nodes having a relationship characterized by a particular link attribute.

15. A data management apparatus comprising:

data storage means; and

data processing means for receiving data and data sequences from a user, for storing nodes in data storage means, each node comprising a separate data sequence, for identifying each of the stored nodes as being included in one of a plurality of contexts wherein each of said contexts comprises a separate group of said stored nodes, and for receiving from said user and storing in said data storage means link data referencing at least one pair of said nodes as having a relationship.

16. The data management apparatus according to claim 15 wherein one node of said at least one pair of stored nodes referenced as having a relationship is included in one of said plurality of contexts while another node of said at least one pair of stored nodes is included in another of said plurality of contexts.

17. A data management apparatus comprising:

data storage means; and

data processing means for receiving data and data sequences from a user, for storing nodes in data storage means, each node comprising a separate data sequence, for identifying each of the stored nodes as being included in one of a plurality of contexts wherein each of said contexts comprises a separate group of said stored nodes, for receiving from said user and storing in said data storage means link data referencing at least one pair of said nodes as having a relationship, link attribute data indicating at least one link attribute characterizing said relationship, and context attribute data indicating at least one context attribute characterizing at least one of said contexts.

FIG. I

0270360

FIG. 2

FIG. 6

0270360

FIG.3

FIG.4

0270360

FIG. 5